# EUROPEAN PATENT APPLICATION

(11) **EP 0 957 651 A2**
(43) Date of publication of application: **17.11.1999**
(21) Application number: 99850079.7
(22) Date of filing: 10.05.1999
(51) Int. Cl.: H04Q 7/32

(54) **Mobile telephone with cypher card**

(30) Priority: 12.05.1998 SE 9801635
(71) Applicant: Sectra Communications AB, 583 30 Linköping (SE)
(72) Inventor: Mastrovito, Eduardo, 586 66 Linköping (SE)
(74) Representative: Berglund, Erik Wilhelm

(57) **Abstract**

Mobile telephone (1), for instance a GSM telephone with a corresponding SIM card (8) for authentication within a GSM network. The telephone is additionally provided with a reception slot (12) for a smart card (10) containing ciphering keys that on temporary insertion together with additional enciphering and deciphering circuits and programs in the telephone can make very secure end to end communication possible. In this way eavesdropping or accidental overhearing becomes practically impossible.

## Description

Today a substantial portion of all telephone communications is done over mobile telephones instead of fixed telephones. Since mobile communications includes radio transmission it has at the same time become easier to eavesdrop a telephone conversation, in particular in the case of cordless telephones. Even if uplink and downlink as in the GSM case are separated in frequency and time, and the amount of possible frequencies is large, intelligent scanning devices can fairly easily succeed in tracking a particular conversation and eavesdrop. Sometimes it may of course also be sufficient to hear the communication in one direction to gain valuable understanding of the ongoing conversation. In the old days of fixed communications one had to tap the wireline to eavesdrop a conversation, this in turn being detectable and punishable. With mobile phones the eavesdropping can be done in complete secrecy and without detection risk so although still illegal, it can not really be stopped. The ciphering of the radio links optionally applied in GSM and DECT systems can make eavesdropping more difficult but still feasible due to the relative weakness of the GSM and DECT ciphers. A conversation could be recorded, analyzed and deciphered offline.

Furthermore all mobile communications must be routed as plain speech or binary data streams through at least some parts of the mobile network's fixed infrastructure (e.g. base stations, base station controllers and mobile switching centers). It is thus also possible to eavesdrop a mobile telephone by tapping some wires in e.g. a base station.

There is also the risk that conversations are overheard by chance. This is even more likely to occur with so-called cordless telephones since these share a smaller amount of frequencies.

At the same time an increasing amount of data such as agreements, business information, technical information and other confidential information is communicated over the telephone networks, in particular over mobile telephone networks.

In view of the above problems it is the object of the invention to enable a more secure transfer of confidential information via mobile telephones, cordless phones and the like radio based communication devices or equipments.

The object of the invention is solved by the invention by providing the telephone with additional ciphering means including a connection for an additional smart card containing the ciphering keys. This enciphering smart card, hereinafter abbreviated ESC, includes memory means and/or processing means, and can enable enciphering of the speech in a preprogrammed way which only a corresponding ESC in the receiving telephone is aware of. Only the ESC in the intended receiver(s) is provided with the same cipher keys as the originator.

The additional chipering is performed end to end which means that the enciphered message is protected all the way from originator to recipient preventing thus eavesdropping along the transmission path - including fixed network elements such as base stations.

Instead of providing only the enciphering keys the ESC could take care of the entire ciphering function.

Since most mobile phones are already equipped with a smart card (SIM card) for various identification purposes, most telephones according to the invention will be provided with two cards with different contents, and different objects as well as different locations in the phone. The SIM card remains normally in the phone and may therefore be situated e.g. behind the battery pack. The ESC however is to be insertable and removable with ease during operation.

Also cordless telephones could be provided with an ESC.

It needs not only be the case of two telephones that can communicate in this way, instead it could be a group of telephones, in which case a number of ESCs are configured to co-operate.

In a further development of the invention a group of ESCs may be organized in different levels or in a different way so that for instance a master ESC can enable contact with all ESCs in the group whereas the other ESCs may be divided into subgroups that can only communicate within the subgroup and with the master ESC telephone. In other words the ESC hierarchy can be designed to match very specific needs.

Since a telephone with an ESC in it can be stolen or lost it is suggested in accordance with a further development of the invention that the ESC is easy to remove from the telephone at any time. Indeed it is preferable that the telephone cannot be returned to its idle state without the removal of the card. In the case of a foldable phone where for instance the mouthpiece is folded as a lid over the keyboard, folding may be prevented mechanically by the card itself, it may for instance when inserted extend into the path of the lid. The insertion of the card can alternatively trigger a simple mechanical device locking the lid in its open position. In this way it is difficult to forget removing the ESC. The telephone may also signal or warn that the card is in the phone if one tries to close the lid or to shut it off with the ESC still in it.

Instead of having an elaborated hierarchy among the ESCs, users may possess a number of ESCs for different communication paths or different persons that they wish to communicate in secrecy with. Also it is not necessary that all ESCs are intended for speech communication. Since an increasing portion of all mobile communications consists of data it is easily foreseen that the invention will be used for data communications as well. Banking services are an example of data services that require confidentiality.

Although the telephone according to the invention may be of any type it may in particular be:
a GSM900 mobile station,
a DECT portable part
a dual-mode GSM900/DECT terminal
a dual-band GSM900/DCS1800 terminal
a triple-band GSM900/DCS1800/PCS1900 terminal
a TETRA mobile station
a UMTS mobile station
a dual-mode GSM900/UMTS terminal
a dual-mode GSM900/Satellite terminal

In some of these cases the telephone will in addition to the ESC be equipped with two other cards for the networks' identification and authentication.

Further preferable developments of the invention are apparent from the claims and the following description of a preferred embodiment shown in the drawings. In the drawings fig 1 shows a mobile telephone according to the invention in a lateral view in a first position, fig 2 the same phone in a second position and fig 3 the phone in a third position.

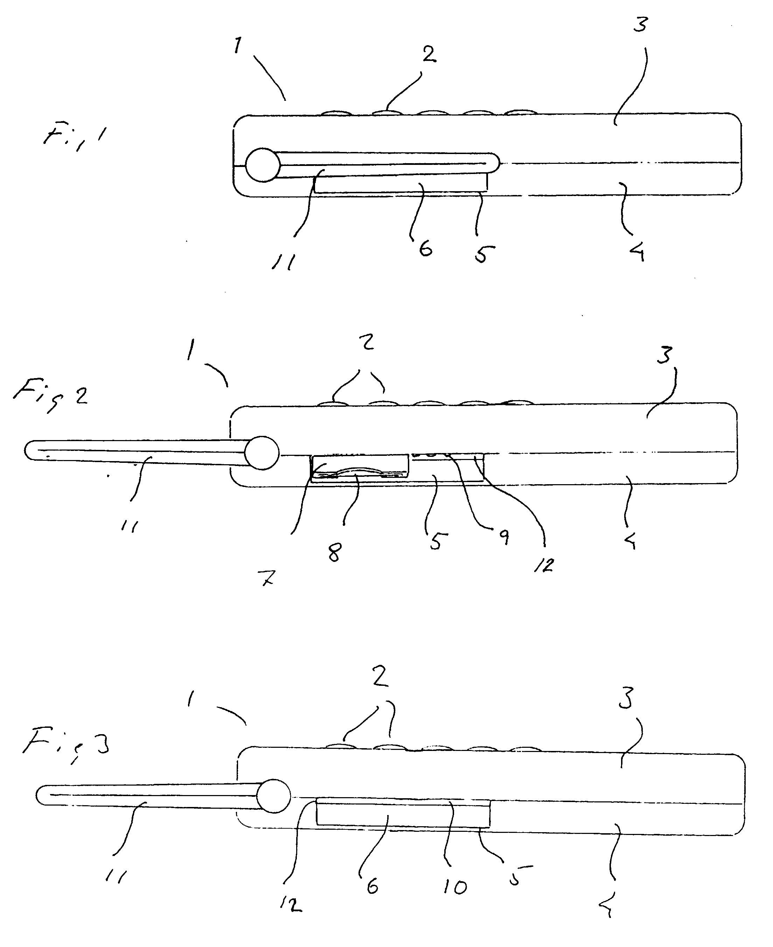

The telephone 1 in the drawings is provided with keys 2 and a display (not visible) Between the top 3 and bottom 4 shell of the telephone housing an opening 5 is present for the insertion of a flat battery 6. When the battery is removed a small receptacle 7 for a SIM card 8 tilts up into the battery opening and the SIM card is accessible for removal or insertion through the slot or opening 5 as can be seen in fig 2. When the battery is once again inserted the receptacle tilts back out of the way.

Next to the battery slot 5 above and adjoining this is an opening slot 12 situated so that the total opening is about two millimeter wider than the battery thickness requires. Into this slot 12 an enciphering smart card (ESC) for end to end encryption can be inserted. This card has the the size of a credit card. When this card is inserted its contact points are contacted by the contacts 9 shown next to the SIM-card receptacle 10. The ESC can not be inserted in its entirety into the phone but will when inserted to its working position still extend outside the housing by about one half, making it practically impossible to forget it there after use.

The ESC can be inserted before a communication is commenced or during communication.

The telephone is in its lower end provided with an antenna 11 that is mounted for a swing movement parallel to the length direction of the phone, from the position shown in fig 1 to the position in fig 2. The antenna is resiliently pretensioned towards the body of the phone snap locking it in its folded or rest position along the side of the phone covering the ESC slot, thus preventing the introduction of unintended objects as long as the antenna is in rest position. In this way the user will also find it impossible to fold the antenna if the ESC remains in the phone.

The resilient mounting of the antenna result not only in snap locking it but will also protect the mounting from being accidentally damaged.

The antenna may be provided with snap-lock means enabling locking of a position obliquely backwards so that the telephone can stand up on a table.

In a slightly altered version the antenna may be slidably extendable downwards and at the same time serve as a lid over the ESC slot. Also a connection for an external antenna may be arranged together with other connections in a known manner.

The ESC may also include pin codes or other choices made by the user, for instance depending on whom he intends to contact. The ESC may also contain the telephone number of the receiver. The ESC may also be tightly bound to a specific telephone so that it can not be used unless one has access to the intended telephone.

## Claims

1. Radiobased communication device or equipment for instance telephone **characterized in** being equipped with an enciphering circuit operating end to end and receiving the cipher keys from a cipher smart card that is insertable into an apposite slot in the telephone so as to enable enciphering or deciphering of speech and/or data to and from the telephone.

2. Device according to claim 1 in particular a mobile telephone **characterized in** that it is also equipped with a communication smart card for mutual identification and authentication between the device and the network service provider.

3. Device according to claim 1 or 2, **characterized in** the slot in the device for the accommodation of the cipher smart card being so located that the mouthpiece or keyboard lid can not be folded without the removal of the card.

4. Device according to any of the preceding claims, **characterized in** the enciphering circuit being contained in the cipher smart card.

5. Device according to any of the preceding claims, **characterized in** transmitting speech over any of the data channels of the GSM-system.

6. Device according to any of the preceding claims, **characterized in** being equipped with more than one slot or location for smart cards for instance so that two or more persons must insert their cards to enable ciphered communication.

7. Device according to any of the preceding claims, **characterized in** being a GSM900 mobile station or a DECT portable part.

8. Device according to any of the preceding claims, **characterized in** being a multiple mode telephone, for instance a dual-mode GSM900/DECT terminal, a dual-band GSM900/DCS1800 terminal, a triple-band GSM900/DCS1800/PCS1900 terminal, a dual-mode, GSM900/UMTS terminal or a dual-mode GSM900/Satellite terminal.

9. Device according to any of the preceding claims, **characterized in** being a TETRA mobile station, or a UMTS mobile station.

10. Device according to any of the preceding claims, **characterized in** the cipher smart card not being fully insertable rendering it less easy to be unintentionally left in the device, for instance a telephone.

11. Device according to any of the preceding claims **characterized in** an antenna that is foldable or retractable and also covering or closing the cipher smart card slot or opening when folded along the device and in particular telephone body.
